# EUROPEAN PATENT APPLICATION

(11) **EP 3 431 779 A1**
(43) Date of publication of application: **23.01.2019**
(21) Application number: 17819768.7
(22) Date of filing: 02.06.2017
(51) Int. Cl.: F15B 11/00

(54) **FLUID PRESSURE CONTROL DEVICE**

(30) Priority: 29.06.2016 JP 2016128780
(71) Applicant: KYB Corporation, Tokyo 105-6111 (JP)
(72) Inventor: ISOGAI, Hiroki, Tokyo 105-6111 (JP)
(74) Representative: Grünecker Patent- und Rechtsanwälte PartG mbB
(86) International application number: PCT/JP2017/020639
(87) International publication number: WO 2018/003403

(57) **Abstract**

A fluid pressure control device (100) includes a first tank passage (31) connecting first tank ports (11a) to (17a) to each other, a second tank passage (32) connecting second tank ports (11b) to (17b) to each other, a connection passage (33) connecting one end side of the first tank passage (31) and one end side of the second tank passage (32) and a discharge port (34) provided on the other end side of the first tank passage (31) and connected to a tank (T). A communication spool (50) formed with a communication passage (51) allowing communication between the first tank passage (31) and the second tank passage (32) is housed in at least one of a plurality of spool housing holes (11) to (17).

## Description

### TECHNICAL FIELD

The present invention relates to a fluid pressure control device.

### BACKGROUND ART

JP51-4629A describes a fluid pressure operating device for construction machine with a plurality of spool valves.

In the fluid pressure operating device described in JP51-4629A, tank ports to be connected to a tank are provided on both ends of each of housing holes for housing spools, and each tank port is connected to each other.

### SUMMARY OF INVENTION

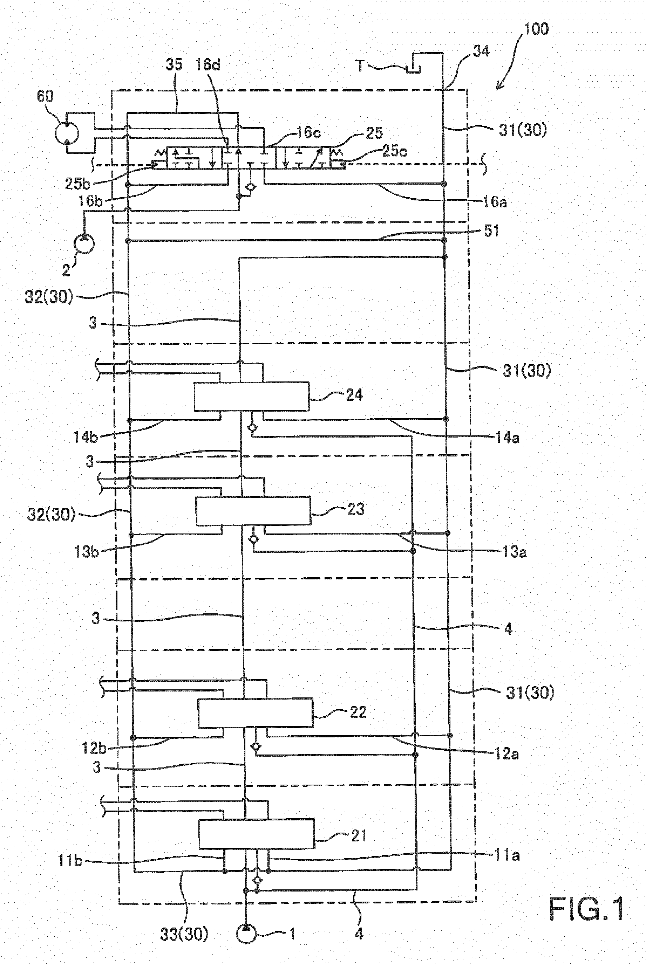

In the fluid pressure operating device described in JP51-4629A, a length of a flow passage from the tank port on one end of the same spool valve to the tank and that of a flow passage from the tank port on the other end to the tank differ. For example, the tank port on one end side (right side in FIG. 1) of the spool valve for boom operation is connected to the tank while joining the tank port on the other end side (left side in FIG. 1) of another spool valve after passing through the tank port on one end side of the other spool valve and returning. In contrast, the tank port on the other end side is connected to the tank without joining the tank port of the other spool valve.

As just described, if distances from the tank ports to the tank differ, resistances when working oil is discharged differ. Thus, an operation feeling differs depending on a switching direction of the spool valve. Particularly, in the case of using a turning motor configured to symmetrically operate with respect to a switching direction of a spool valve as an actuator, an operation feeling differs depending on the switching direction of the spool valve, wherefore an operator feels a sense of incongruity.

The present invention was developed in view of the above problem and provides a fluid pressure control device capable of improving an operation feeling.

According to one aspect of the present invention, a fluid pressure control device for controlling a plurality of actuators includes: a valve body; and a plurality of spools housed in the valve body. The valve body includes: a plurality of spool housing holes for respectively housing the spools; first tank ports provided on one side of each of the spool housing holes and connected to a tank; second tank ports provided on the other side of each of the spool housing holes and connected to the tank; a first tank passage connecting the first tank ports to each other; a second tank passage connecting the second tank ports to each other; a connection passage connecting one end side of the first tank passage and one end side of the second tank passage; and a discharge port provided on the other end side of the first tank passage and connected to the tank. A communication spool formed with a communication passage allowing communication between the first tank passage and the second tank passage is housed in at least one of the plurality of spool housing holes.

### BRIEF DESCRIPTION OF DRAWINGS

FIG. 1 is a circuit diagram showing a fluid pressure control device according to a first embodiment of the present invention,
FIG. 2 is a sectional view of a valve body according to the first embodiment of the present invention,
FIG. 3 is a circuit diagram showing a fluid pressure control device according to a second embodiment of the present invention, and
FIG. 4 is a sectional view of a valve body according to the second embodiment of the present invention.

### DESCRIPTION OF EMBODIMENTS

### < First Embodiment>

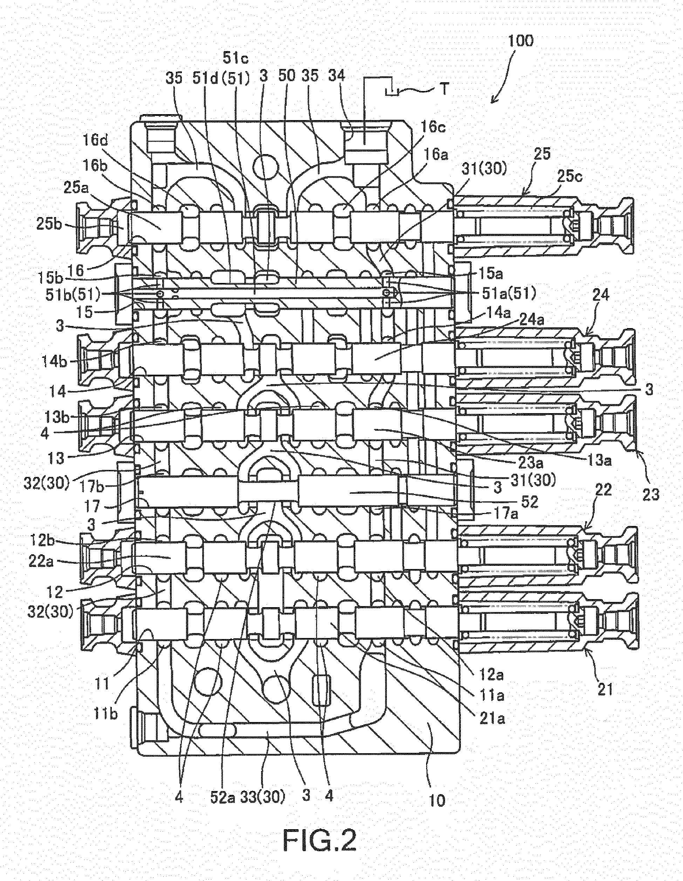

Hereinafter, a fluid pressure control device 100 according to a first embodiment of the present invention is described with reference to FIGS. 1 and 2.

FIG. 1 is a circuit diagram showing the fluid pressure control device 100 in the first embodiment.

The fluid pressure control device 100 is used, for example, in a working machine such as a power shovel. Although the working machine is described to be a power shovel here, the fluid pressure control device 100 is applicable to other working machines such as cranes. Further, although working oil is used as working fluid in the fluid pressure control device 100, another fluid such as working water may be used as the working fluid.

As shown in FIG. 1, the fluid pressure control device 100 includes a neutral passage 3 configured to introduce the working oil supplied from a first pump 1 to a tank T, control valves 21 to 24 configured to control each of a plurality of actuators and serving as a plurality of spool valves connected in series to the neutral passage 3, and a parallel passage 4 branched from the neutral passage 3 on a side upstream of the control valve 21. The neutral passage 3 refluxes the working oil supplied from the first pump 1 to the tank T when all of the control valves 21 to 24 are at a neutral position. The control valves 21 to 24 are connected in series by the neutral passage 3 and connected in parallel by the parallel passage 4.

The working oil discharged from the first pump 1 is introduced to the travel control valve 21, the auxiliary control valve 22, the boom control valve 23 and the arm control valve 24 successively from an upstream side. The travel control valve 21 controls the supply and discharge of the working oil to and from a travel motor (not shown) provided in a vehicle body of the power shovel (not shown). The auxiliary control valve 22 controls the supply and discharge of the working oil to and from an actuator for driving an attachment such as a breaker or crusher to be attached in place of a bucket (not shown). The boom control valve 23 controls the supply and discharge of the working oil to and from an actuator for driving a boom (not shown). The arm control valve 24 controls the supply and discharge of the working oil to and from an actuator for driving an arm (not shown).

In the fluid pressure control device 100, the working oil supplied from the first pump 1 is refluxed to the tank T through the neutral passage 3 and a tank passage 30 when all of the control valves 21 to 24 are at the neutral position. In contrast, if at least one of the control valves 21 to 24 is at a working position, communication between the first pump 1 and the tank T in the neutral passage 3 is shut off.

Further, in the fluid pressure control device 100, the working oil discharged from the first pump 1 is supplied to each of the control valves 22 to 24 through the parallel passage 4 even if any one of the control valves 21 to 24 is switched to the working position and the connection of the first pump 1 and the tank T in the neutral passage 3 is shut off.

The fluid pressure control device 100 further includes a turning motor control valve 25 serving as a spool valve for controlling a turning motor 60 to be driven by the working oil supplied from a second pump 2. The working oil supplied from the second pump 2 is refluxed to the tank T through a tank passage 35 and the tank passage 30 if the turning motor control valve 25 is at a neutral position.

Next, a specific configuration of the fluid pressure control device 100 is described with reference to FIG. 2.

As shown in FIG. 2, the fluid pressure control device 100 further includes a valve body 10, spools 21a to 25a of the control valves 21 to 25 housed in the valve body 10 and a dummy spool 50 serving as a communication spool to be described later.

The valve body 10 includes a plurality of spool housing holes 11 to 16 for respectively housing the spools 21a to 25a and the dummy spool 50, first tank ports 11a to 16a provided on one side of each of the spool housing holes 11 to 16 and connected to the tank T, second tank ports 11b to 16b provided on the other side of each of the spool housing holes 11 to 16 and connected to the tank T, a first tank passage 31 connecting the first tank ports 11a to 16a to each other, a second tank passage 32 connecting the second tank ports 11b to 16b to each other, a connection passage 33 connecting one end side of the first tank passage 31 and one end side of the second tank passage 32, and a discharge port 34 provided on the other end side of the first tank passage 31 and connected to the tank T.

An additional spool housing hole 17 is formed between the spool housing hole 12 for housing the auxiliary control valve 22 and the spool housing hole 13 for housing the boom control valve 23 so that a control valve can be added. Similarly to the spool housing holes 11 to 16, the spool housing hole 17 is formed with a first tank port 17a provided on one side and connected to the first tank passage 31 and a second tank port 17b provided on the other side and connected to the second tank passage 32. It should be noted that the additional spool housing hole 17 may not be provided.

A closing member 52 serving as a spool is housed in the spool housing hole 17. The closing member 52 includes a small-diameter portion 52a allowing communication between a part of the neutral passage 3 communicating with the spool housing hole 12 formed in the valve body 10 and a part of the neutral passage 3 communicating with the spool housing hole 13. The closing member 52 shuts off connection between adjacent ports formed in the spool housing hole 17.

The neutral passage 3 is formed across the spool housing holes 11 to 14, 17 in the valve body 10. The turning motor control valve 25, the arm control valve 24, the boom control valve 23, the auxiliary control valve 22 and the travel control valve 21 are successively provided from the side of the discharge port 34 in the valve body 10. Although the dummy spool 50 is housed in the spool housing hole 15 in the embodiment shown in FIG. 2, the dummy spool 50 may be housed in any one of the spool housing holes 11 to 14, 16 and 17 according to the arrangement of the control valves 21 to 25 and necessity.

The dummy spool 50 includes an annular cut portion 51d formed on an outer peripheral surface and constituting a part of the neutral passage 3. Specifically, the cut portion 51d is formed to have a smaller diameter than other pats and allows communication between a part of the neutral passage 3 communicating with the spool housing hole 14 formed in the valve body 10 and a part of the neutral passage 3 communicating with the tank T. It should be noted that the shape of the cut portion 51d is not limited to the annular shape if the cut portion 51d can allow communication between the part of the neutral passage 3 communicating with the spool housing hole 14 and the part of the neutral passage 3 communicating with the tank T, and the cut portion 51d may be a groove or notch provided in an axial direction of the dummy spool 50. The dummy spool 50 shuts off connection between adjacent ports formed in the spool housing hole 15.

A communication passage 51 includes a plurality of first communication passages 51a radially provided in the dummy spool 50 and communicating with the first tank passage 31, a plurality of second communication passages 51b radially provided in the dummy spool 50 and communicating with the second tank passage 32 and a third communication passage 51c axially provided in the dummy spool 50 and allowing communication between the first and second communication passages 51a, 51b. In this way, the first and second tank passages 31, 32 constantly communicate via the communication passage 51.

The first and second tank passages 31, 32 are formed substantially in parallel and perpendicular to the spool housing holes 11 to 17 in the valve body 10. The first tank passage 31, the second tank passage 32 and the connection passage 33 are equivalent to the tank passage 30.

Next, functions of the communication passage 51 formed in the dummy spool 50 are described. First, a case without the communication passage 51 is described for comparison.

When a pilot pressure is supplied to a pilot chamber 25b of the turning motor control valve 25 by operating an unillustrated pilot operation valve, a spool 25a moves rightward in FIG. 2 and a first cylinder port 16c and the first tank port 16a communicate. In this way, the working oil discharged from the turning motor 60 is discharged to the tank T through the first cylinder port 16c, the first tank port 16a, the first tank passage 31 and the discharge port 34.

In contrast, when the pilot pressure is supplied to a pilot chamber 25c of the turning motor control valve 25 by operating the pilot operation valve (not shown), the spool 25a moves leftward in FIG. 2 and a second cylinder port 16d and the second tank port 16b communicate. In this way, the working oil discharged from the turning motor 60 is discharged to the tank T through the second cylinder port 16d, the second tank port 16b, the second tank passage 32, the connection passage 33, the first tank passage 31 and the discharge port 34.

As just described, a distance from the first tank port 16a to the discharge port 34 and a distance from the second tank port 16b to the discharge port 34 differ. Accordingly, when the turning motor 60 is driven, resistances of the working oil discharged from the first and second tank ports 16a, 16b to the tank T differ. Thus, even if the pilot operation valve is operated in an opposite direction by the same operation amount, a speed of the turning motor 60 is different since the resistance of the discharged working oil differs depending on a switching direction of the turning motor control valve 25 (spool 25a). Therefore, an operation feeling felt by an operator differs depending on an operating direction of the pilot operation valve.

Accordingly, the fluid pressure control device 100 includes the dummy spool 50 provided with the communication passage 51. This causes the working oil discharged from the second cylinder port 16d of the turning motor 60 to be discharged to the tank T through the second tank port 16b, the second tank passage 32, the communication passage 51, the first tank passage 31 and the discharge port 34 when the pilot pressure is supplied to the pilot chamber 25c of the turning motor control valve 25. Since the working oil discharged to the second tank port 16b does not flow by way of the spool housing holes 11, 12, 13, 14 and 17 and the connection passage 33 by including the dummy spool 50 provided with the communication passage 51 as just described, the distance from the second tank port 16b to the discharge port 34 can be shortened. Thus, a resistance difference when the working oil is discharged from the first and second tank ports 16a, 16b to the tank T becomes smaller, wherefore an operation feeling is improved.

In the fluid pressure control device 100, the spool 25a of the turning motor control valve 25 for controlling the turning motor 60 is arranged closest to the discharge port 34. Since the turning motor 60 symmetrically operates with respect to the switching direction of the turning motor control valve 25, the operator tends to feel a sense of incongruity. In the fluid pressure control device 100, the difference between the distance from the first tank port 16a to the discharge port 34 and the distance from the second tank port 16b to the discharge port 34 can be made smaller by including the dummy spool 50 provided with the communication passage 51. Thus, when being used, the turning motor 60 can be similarly operated in response to the operation amount of the pilot operation valve regardless of the operating direction. Therefore, a sense of incongruity felt by the operator can be more reduced and the operation feeling is improved.

Further, in the fluid pressure control device 100, the working oil discharged from another actuator to the second tank port 11b to 14b of the control valve 21 to 24 can be discharged to the tank T by way of the communication passage 51 of the dummy spool 50. Thus, also in these control valves 21 to 24, a resistance difference when the working oil is discharged from the first and second tank ports 11a to 14a, 11b to 14b to the tank T can be made smaller, wherefore the operation feeling can be improved.

According to the above first embodiment, the following effects are exhibited.

Since the communication passage 51 allowing communication between the first tank passage 31 connecting the first tank ports 11a to 17a to each other and the second tank passage 32 connecting the second tank ports 11b to 17b to each other is provided in the fluid pressure control device 100, a difference between a distance from the first tank port 11a to 17a to the tank T and a distance from the second tank port 11b to 17b to the tank T can be made smaller. In this way, a resistance difference when the working oil is discharged from the first and second tank ports 16a, 16b to the tank T can be made smaller. Therefore, an operation feeling at the time of operating the control valves 21 to 25 is improved.

In the fluid pressure control device 100, the spool 25a of the turning motor control valve 25 for controlling the turning motor 60 is arranged closest to the discharge port 34. If the communication passage 51 is not provided, the working oil discharged from the second tank port 16b of the turning motor control valve 25 is discharged through the second tank passage 32, the connection passage 33 and the first tank passage 31 while detouring the control valves 21 to 24. However, in the fluid pressure control device 100, the dummy spool 50 provided with the communication passage 51 is housed in the spool housing hole 15 adjacent to the turning motor control valve 25. Since the distance from the second tank port 16b of the turning motor control valve 25 to the discharge port 34 can be made as short as possible in this way, the difference between the distance from the first tank port 16a to the discharge port 34 and the distance from the second tank port 16b to the discharge port 34 can be made as small as possible. Thus, a sense of incongruity felt by the operator when the turning motor 60 is used can be more reduced and the operation feeling can be more improved.

Furthermore, in the fluid pressure control device 100, the communication passage 51 allowing communication between the first and second tank passages 31, 32 can be formed only by housing the dummy spool 50 into the spool housing hole 11 to 17. That is, it is not necessary to apply special machining to the valve body 10 or change the shape of the valve body 10 to provide the communication passage 51 in the spool housing hole 11 to 17.

### <Second Embodiment>

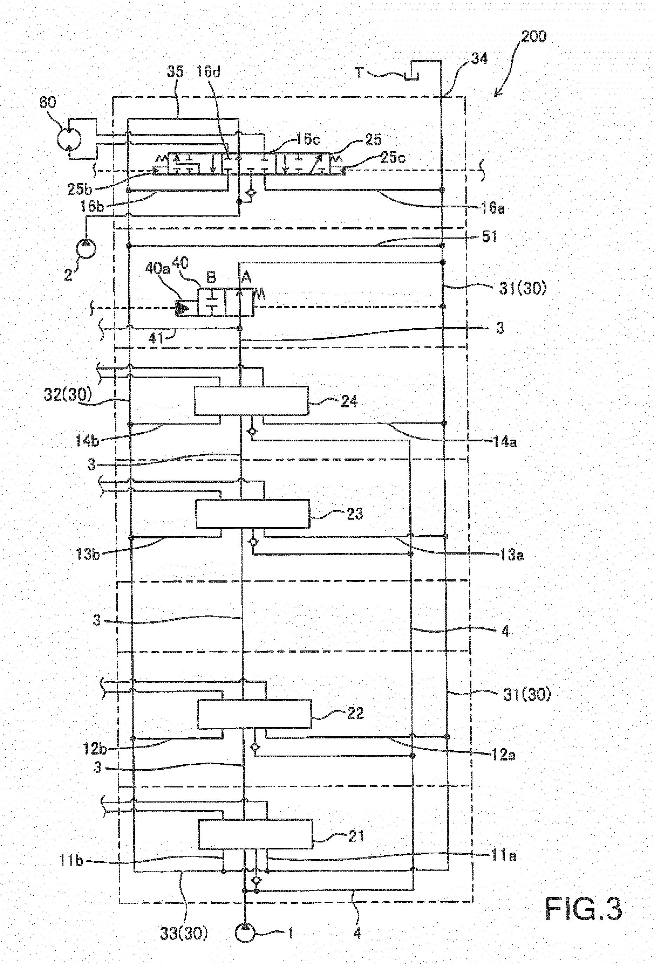

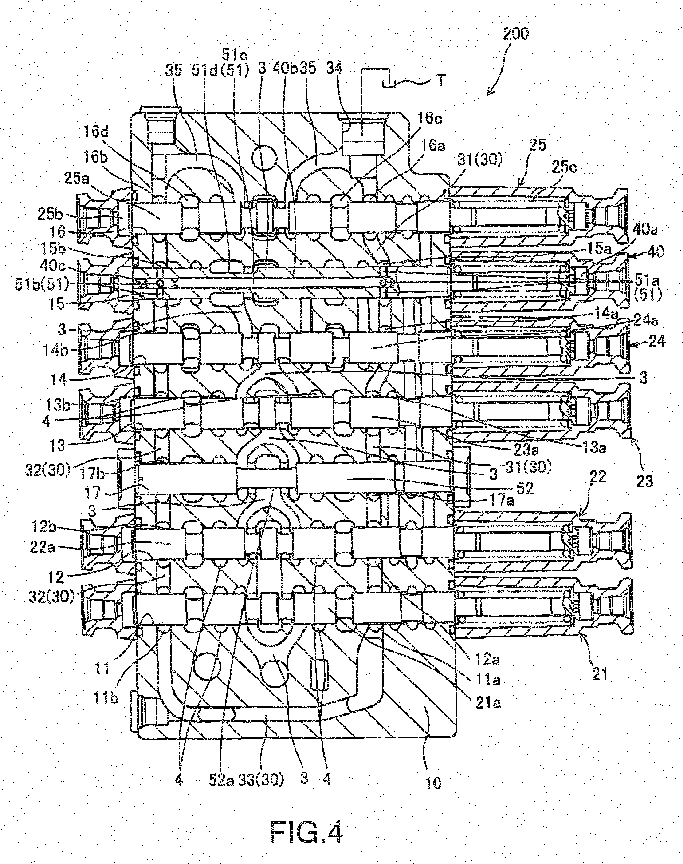

Next, a fluid pressure control device 200 according to a second embodiment of the present invention is described with reference to FIGS. 3 and 4. The following description is centered on points of difference from the above first embodiment and the same components as those of the fluid pressure control device 100 of the first embodiment are denoted by the same reference signs and not described.

Although the dummy spool 50 is housed in the spool housing hole 15 in the fluid pressure control device 100, a spool 40b of a neutral cut valve 40 formed with a communication passage 51 is housed in a spool housing hole 15 in the fluid pressure control device 200. The neutral cut valve 40 is specifically described below.

As shown in FIG. 3, the fluid pressure control device 200 further includes the neutral cut valve 40 provided downstream of control valves 21 to 24 in a neutral passage 3 and configured to allow or shut off connection between the neutral passage 3 and a tank T, and a branch passage 41 communicating with a part of the neutral passage 3 downstream of the arm control valve 24 and upstream of the neutral cut valve 40 and capable of supplying working oil discharged from a first pump 1 to outside. An actuator (not shown) or the like can be connected to the branch passage 41.

The neutral cut valve 40 allows connection between the neutral passage 3 and the tank T when being at a position A (normal position) in FIG. 3, and shuts off connection between the neutral passage 3 and the tank T when being at a position B (shut-off position) in FIG. 3. The neutral cut valve 40 is located at the position A (normal position) in a state where the working oil is not supplied into a pilot chamber 40a, and switched to the position B (shut-off position) when the working oil is supplied to the pilot chamber 40a. With the neutral cut valve 40 located at the position A (normal position), the working oil discharged by the first pump 1 is refluxed to the tank T without being supplied to the branch passage 41. In contrast, with the neutral cut valve 40 located at the position B (shut-off position), communication between the neutral passage 3 and the tank T is shut off. Thus, all the working oil discharged from the first pump 1 is supplied to outside through the branch passage 41.

FIG. 4 is a sectional view of a valve body 10 of the fluid pressure control device 200. As shown in FIG. 4, the communication passage 51 formed in the spool 40b of the neutral cut valve 40 has the same configuration as the communication passage 51 formed in the dummy spool 50. However, in the communication passage 51 of the neutral cut valve 40, an opening end of the third communication passage 51c is closed by a plug 40c.

In the fluid pressure control device 200 configured as just described, the first and second tank passages 31, 32 are allowed to communicate by the communication passage 51 formed in the spool 40b of the neutral cut valve 40. In the present embodiment, the spool 40b of the neutral cut valve 40 is equivalent to a communication spool.

According to the above second embodiment, the following effects are exhibited in addition to the effects of the first embodiment.

Since the communication passage 51 is formed in the spool 40b of the neutral cut valve 40 in the fluid pressure control device 200, a space in the valve body 10 can be effectively utilized.

It should be noted that the communication passage 51 may be provided in a spool 21a to 24a of the control valve 21 to 24 instead of providing the communication passage 51 in the spool 40b of the neutral cut valve 40.

The configurations, functions and effects of the embodiments of the present invention configured as described above are summarized.

The fluid pressure control device 100, 200 includes the valve body 10 and the plurality of spools (spools 21a to 25a, dummy spool 50, closing member 52, spool 40b) to be housed in the valve body 10. The valve body 10 includes the plurality of spool housing holes 11 to 17 for respectively housing the spools (spools 21a to 25a, dummy spool 50, closing member 52, spool 40b), the first tank ports 11a to 17a provided on one side of each of the spool housing holes 11 to 17 and connected to the tank T, the second tank ports 11b to 17b provided on the other side of each of the spool housing holes 11 to 17 and connected to the tank T, the first tank passage 31 connecting the first tank ports 11a to 17a to each other, the second tank passage 32 connecting the second tank ports 11b to 17b to each other, the connection passage 33 connecting one end side of the first tank port 31 and one end side of the second tank passage 32 and the discharge port 34 provided on the other end side of the first tank passage 31 and connected to the tank T. The communication spool (dummy spool 50, spool 40b) formed with the communication passage 51 allowing communication between the first and second tank passages 31, 32 is housed in at least one of the plurality of spool housing holes 11 to 17.

According to this configuration, the communication passage 51 is provided which allows communication between the first tank passage 31 connecting the first tank ports 11a to 17a to each other and the second tank passage 32 connecting the second tank ports 11b to 17b to each other. Thus, a difference between a distance from the first tank port 11a to 17a to the tank T and a distance from the second tank port 11b to 17b to the tank T can be made smaller. In this way, a resistance difference when the working oil is discharged from the first tank port 11a to 17a and the second tank port 11b to 17b to the tank T can be made smaller. In this way, the operation feeling is improved.

The fluid pressure control device 100 further includes the neutral passage 3 formed across the plurality of spool housing holes 11 to 15 and configured to reflux the working fluid (working oil) supplied from the pump (first pump 1) to the tank T when all of the plurality of spools (spools 21a to 24a) are at the neutral position, and the communication spool (dummy spool 50) includes the cut portion 51d formed on the outer peripheral surface and constituting a part of the neutral passage 3.

According to this configuration, since the communication spool (dummy spool 50) includes the cut portion 51d formed on the outer peripheral surface and constituting a part of the neutral passage 3, the neutral passage 3 needs not detour the communication spool (dummy spool 50). Thus, the device can be reduced in size.

Also, the fluid pressure control device 200 further includes the neutral passage 3 formed across the plurality of spool housing holes 11 to 15 and configured to reflux the working fluid (working oil) supplied from the pump (first pump 1) to the tank T when all of the plurality of spools (spools 21a to 24a) are at the neutral position and the neutral cut valve 40 provided downstream of the plurality of spools (spools 21a to 24a) in the neutral passage 3 and configured to allow or shut off connection between the neutral passage 3 and the tank T, and the communication spool is the spool 40b of the neutral cut valve 40.

According to this configuration, since the communication passage 51 is formed in the spool 40b of the neutral cut valve 40, the space in the valve body 10 can be effectively utilized and the shape of the valve body 10 needs not be changed only to provide the communication passage 51.

Further, in the fluid pressure control device 100, 200, one of the plurality of actuators is the turning motor 60, the turning motor 60 is controlled by the spool 25a closest to the discharge port 34 out of the plurality of spools 21a to 25a, and the communication spool (dummy spool 50, spool 40b) is housed in the spool housing hole 15 adjacent to the spool 25a for controlling the turning motor 60.

According to this configuration, a sense of incongruity felt by an operator can be more reduced and an operation feeling can be more improved when the turning motor 60 is used as the actuator.

Embodiments of this invention were described above, but the above embodiments are merely examples of applications of this invention, and the technical scope of this invention is not limited to the specific constitutions of the above embodiments.

Although the turning motor control valve 25 is provided at the position closest to the discharge port 34 in the above embodiments, the control valves 21 to 25 may be provided in any sequence. Further, the turning motor 60 may be driven by the first pump 1 without providing the second pump 2.

In the above first embodiment, the spool housing hole 15 may be formed as a spool housing hole capable of housing the spool 40b of the neutral cut valve 40 in advance. In this case, the neutral cut valve 40 can be easily configured by housing the spool 40b into the spool housing hole 15 instead of the dummy spool 50.

This application claims priority based on Japanese Patent Application No.2016-128780 filed with the Japan Patent Office on June 29, 2016, the entire contents of which are incorporated into this specification.

## Claims

1. A fluid pressure control device for controlling a plurality of actuators, comprising:
a valve body; and
a plurality of spools housed in the valve body,
wherein:
the valve body includes:
a plurality of spool housing holes for respectively housing the spools;
first tank ports provided on one side of each of the spool housing holes and connected to a tank;
second tank ports provided on the other side of each of the spool housing holes and connected to the tank;
a first tank passage connecting the first tank ports to each other;
a second tank passage connecting the second tank ports to each other;
a connection passage connecting one end side of the first tank passage and one end side of the second tank passage; and
a discharge port provided on the other end side of the first tank passage and connected to the tank; and
a communication spool formed with a communication passage allowing communication between the first tank passage and the second tank passage is housed in at least one of the plurality of spool housing holes.

2. The fluid pressure control device according to claim 1, further comprising:
a neutral passage formed across the plurality of spool housing holes, the neutral passage being configured to reflux working fluid supplied from the pump to the tank when all of the plurality of spools are at a neutral position;
wherein the communication spool includes a cut portion formed on an outer peripheral surface and constituting a part of the neutral passage.

3. The fluid pressure control device according to claim 1, further comprising:
a neutral passage formed across the plurality of spool housing holes, the neutral passage being configured to reflux working fluid supplied from the pump to the tank when all of the plurality of spools are at a neutral position; and
a neutral cut valve provided downstream of the plurality of spools in the neutral passage, the neutral cut valve being configured to allow or shut off connection between the neutral passage and the tank;
wherein the communication spool is a spool of the neutral cut valve.

4. The fluid pressure control device according to claim 1, wherein:
one of the plurality of actuators is a turning motor;
the turning motor is controlled by the spool closest to the discharge port out of the plurality of spools; and
the communication spool is housed in the spool housing hole adjacent to the spool for controlling the turning motor.
